# FASCICULE DE BREVET EUROPEEN

(11) **EP 0 707 450 B1**
(45) Date de publication et mention de la délivrance du brevet: **03.02.1999**
(21) Numéro de dépôt: 94919722.2
(22) Date de dépôt: 16.06.1994
(51) Int. Cl.: A45C 5/00, B65D 43/02, B62D 25/10, B60J 5/00, E06B 5/14

(54) **ENSEMBLE COMPRENANT AU MOINS DEUX PARTIES DISTINCTES, TEL QU'UN BAGAGE A COUVERCLE, UN VEHICULE A PORTIERES, ET ANALOGUES**
AUS ZWEI VERSCHIEDENEN TEILEN BESTEHENDER SATZ SO ALS GEPÄCK MIT DECKEL, FAHRZEUG MIT TÜREN ODER ÄHNLICHES
ASSEMBLY COMPRISING AT LEAST TWO SEPARATE PORTIONS, SUCH AS A SUITCASE WITH A LID, A VEHICLE WITH DOORS OR THE LIKE

(30) Priorité: 16.06.1993 FR 9307246
(43) Date de publication de la demande: 24.04.1996
(73) Titulaire: JUBINOV, Grand-Quevilly (Seine Maritime) (FR)
(72) Inventeur: JUBIN, Jean-Jacques, Grand Quevilly (Seine Maritime) (FR)
(74) Mandataire: Rataboul, Michel Charles
(86) Numéro de dépôt international: FR9400725
(87) Numéro de publication internationale: WO9428757

(56) Documents cités:
- DE-A- 1 486 241
- DE-A- 2 942 721
- DE-B- 1 046 293
- FR-A- 2 388 973
- FR-A- 2 397 334
- FR-A- 2 518 498
- US-A- 3 565 146

## Description

La présente invention concerne un ensemble comprenant au moins deux parties distinctes, en particulier mobiles l'une par rapport à l'autre : bâtiment équipé d'au moins une porte, véhicule comprenant des portières, un coffre à bagages et un capot, contenant tel qu'une malle, une valise, un sac, etc.

Il peut s'agir également de boîtiers nécessitant une fermeture de haute qualité : appareils de prise de vues photographiques, cinématographiques, vidéo et autres. Dans une version assez élaborée, il peut s'agir de portes étanches, de sas de sécurité, et autres.

En effet, quelle que soit l'application, l'invention permet à deux parties mobiles l'une par rapport à l'autre, notamment articulées, d'être reliées de manière extrêmement robuste, afin de résister aux sollicitations que l'usage de l'ensemble fait subir à ces parties, systématiquement ou occasionnellement.

On sait, en particulier, que les bagages reçoivent souvent des coups lors de leurs manipulations en voyage : ils peuvent tomber (parfois d'assez haut) ou recevoir des chocs relativement violents lors du tamponnement de wagons, lors de l'aterrisage d'avions etc.

Ces chocs ont souvent pour effet de solliciter les deux parties mobiles, corps du bagage et couvercle, dans le sens de leur séparation.

Comme ces deux parties coopérent, en position de fermeture, par contact de feuillures, celles-ci résistent bien à des chocs perpendiculaires mais les deux parties ne sont retenues en position de fermeture que par des organes mécaniques rapportés, indépendants des feuillures elles-mêmes.

Généralement ces organes comprennent au moins une partie pivotante devant coopérer avec une partie fixe, à la manière d'un pène de serrure dans une gâche.

En d'autres termes, aussi solides que soient les deux parties, elles ne peuvent pas résister à un effort d'ouverture autrement que par les organes mécaniques qui les relient.

C'est pourquoi les efforts des fabricants portent essentiellement sur ces organes mécaniques car on sait résoudre facilement le problème de la robustesse de l'ensemble lui-même.

Les bagages, par exemple, sont maintenant réalisés en matière synthétique très résistante, formée en deux coquilles bordées de feuillures métalliques et l'on sait que de tels bagages sont aptes à résister à de très fortes pressions sans risquer d'écrasement.

Certains bagages ont une structure métallique très complète qui vient encore rigidifier et renforcer l'ensemble.

Mais ces mêmes bagages peuvent s'ouvrir sous l'effet d'une sollicitation très faible s'ils sont équipés de serrures sommaires.

Pour situer l'état de la technique, on peut citer :
- le document de brevet DE-A-1486241 qui décrit un moyen de blocage de coques constitué de parties rectilignes qui s'interpénètrent à la manière de dents de scie, n'autorisant aucune souplesse de déformation, d'autant que les feuillures sont en lignes brisées et non en courbe.
- le document de brevet FR-A-2397334 qui décrit une boite d'emballage comprenant deux parties distinctes présentant deux feuillures complémentaires, situées sur deux bords parallèles opposés.
- le document de brevet FR-A-2.388.973 qui décrit une solution au problème du forcement d'une porte ou analogue au moyen d'un outil introduit dans un interstice existant entre deux pièces mobiles l'une par rapport à l'autre, en vue d'exercer un effort de levier.

Cette solution consiste à prévoir entre les deux parties mobiles, des surfaces en zigzag, c'est-à-dire formées de dents très nombreuses, très pentues (au moins 45°) et très serrées afin qu'il ne subsiste entre deux dents successives aucune partie rectiligne permettant d'introduire un outil et de faire levier dans le sens de la séparation forcée des deux parties mobiles.

Ainsi : "... Grâce à une telle inclinaison, même si une personne mal intentionnée arrive à introduire un instrument quelconque dans l'interstice [séparant les deux parties mobiles], la pesée qu'elle peut exercer avec cet instrument ne se traduit pas par une composante tendant à écarter [les deux parties mobiles]." (page 2, lignes 31 à 35).

La solution décrite dans ce document concerne donc un problème tout à fait étranger à celui que résoud la présente invention.

En effet, avec la présente invention on ne cherche pas à empêcher l'effraction mais à s'opposer au mouvement relatif des deux parties mobiles, sauf précisément dans la direction de leur séparation normale, qui est aussi celui de l'effraction.

En d'autres termes, un objet réalisé selon l'invention peut être forcé au moyen d'un outil faisant levier puisque les parties en contact sont des grandes courbes qui équivalent, à cet égard, à des lignes droites classiques.

Mais, en revanche, les grandes courbes d'un article conforme à l'invention offrent une résistance considérable à tout effort violent dirigé de l'extérieur contre l'une quelconque des parties mobiles, ce que ne vise pas du tout le document FR-A-2.388.973.

Au contraire, les multiples petites dents qui s'interpénetrent seraient impuissantes à créer une résistance à un effort violent, car on peut craindre qu'un tel effort ait pour résultat de décaler brutalement les dents d'au moins un rang, ce qui bloquerait les deux parties mobiles dans une position aléatoire inacceptable.

La présente invention offre une solution tout-à-fait nouvelle à ce problème en faisant jouer aux feuillures elles-mêmes un rôle de renforcement qui cantonnent les organes mécaniques à une seule fonction : retenir les deux parties exclusivement dans le sens de leur ouverture normale.

Les sollicitations anormales dirigées de l'extérieur : chocs, chutes etc. sont encaissées par les feuillures qui sont conçues pour résister à des forces considérables en jouant un double rôle : dans le sens d'un glissement les feuillures interpénétrées se comportent comme un huître dont on essaierait de faire glisser le couvercle par rapport au corps; dans le sens d'un écrasement des parties perpendiculairement aux feuillures, celles-qi se comportent comme une voûte dont on connait l'extrême résistance par comparaison à une paroi rectiligne.

A cette fin, l'invention a pour objet un ensemble tel qu'un bâtiment, un véhicule, un contenant et analogue, comprenant au moins deux parties distinctes présentant au moins deux feuillures complémentaires et opposées, situées en regard et destinées à coopérer l'une avec l'autre, caractérisé en ce que les feuillures sont décalées angulairement, c'est-à-dire non parallèles, et ont un profil ondulé présentant, pour chaque feuillure, au moins une portion courbe en arc convexe sur l'une des deux parties et au moins une portion courbe en arc concave sur l'autre, afin que chaque arc convexe soit engagé dans un arc concave de la feuillure opposée quand les deux parties sont appliquées l'une contre l'autre, portions courbes qui ont une amplitude faible, à savoir que leur arc a une flèche de longueur inférieure à la corde correspondante, l'une au moins des parties distinctes ayant une face extérieure convexe, en dôme à courbure très plate formant voûte.

Selon d'autres caractéristiques de l'invention :
- l'arc des courbes a une flèche de longueur comprise entre 1/100 et 1/5 de la longueur de la corde correspondante;
- l'ensemble ayant une longueur L, une largeur l et une troisième dimension, hauteur ou épaisseur, H, la hauteur de la flèche de l'arc des courbes est de l'ordre de grandeur de 2/3 de H;
- les deux parties distinctes sont mobiles l'une par rapport à l'autre entre une position dite "d'ouverture" dans laquelle un passage existe entre les deux parties et une position dite "de fermeture" dans laquelle les deux parties sont appliquées l'une contre l'autre en obturant le passage, lorsque les deux parties sont en position de fermeture;
- les parties ont un contour polygonal et présentent des feuillures sur au moins deux côtés non parallèles de leur contour;
- les parties ont un contour quadrangulaire;
- les parties présentent des feuillures sur leurs quatre côtés;
- les deux parties sont articulées l'une par rapport à l'autre selon un axe de pivotement;
- l'axe de pivotement est proche de l'un des côtés des parties;
- les parties présentent des feuillures sur celui de leurs côtés qui est le plus proche de l'axe d'articulation;
- les parties mobiles doivent coopérer bord à bord, les portions en arc courbe convexe et concave étant situées selon un alignement sensiblement perpendiculaire au plan des parties mobiles proprement dites;
- les parties mobiles doivent se situer, en position de fermeture, dans des plans qui sont sensiblement dans le prolongement l'un de l'autre, de sorte que les bords sont eux-mêmes dans le prolongement desdites parties mobiles et les portions en arc courbe convexe et concave dans le prolongement desdits bords;
- les feuillures présentent des rebords décalés deux à deux et devant se placer l'un contre l'autre lorsque les deux parties sont en position de fermeture;
- un joint souple est assujetti à l'une des feuillures en regard de la feuillure opposée;
- l'ensemble comprend des moyens destinés à rendre étanche la fermeture des deux parties, au droit des feuillures, celles-ci délimitant un espace situé entre les deux parties lorsqu'elles sont en position de fermeture, espace qui est relié à un dispositif d'aspiration d'air;
- l'une des deux parties au moins présente des entretoises devant coopérer avec l'autre partie, en position de fermeture;
- les deux parties présentent des entretoises, celles d'une partie devant se placer contre celles de l'autre partie, en position de fermeture;
- les deux parties distinctes sont réunies pour être rendues non séparables et former une structure unique constituée de deux coques;
- les coques déterminent un espace interne;
- l'espace interne contient des entretoises entre les coques;
- l'espace interne contient un matériau de remplissage.
- l'ensemble a la forme générale d'un galet;
- la partie qui a une face extérieure convexe, en dôme à courbure très plate a un contour polygonal, chaque sommet du polygone étant lui-même de forme courbe et convexe, se raccordant à des faces latérales substantiellement orthogonales à la face extérieure convexe;
- chaque sommet du polygone est une fraction de sphère;
- les deux parties distinctes sont dissymétriques;
- les feuillures ont une largeur variable;
- l'ensemble ayant un contour polygonal, la plus grande largeur des feuillures se trouve au voisinage des sommets du polygone et/ou dans la zone centrale de ses côtés;
- la plus grande largeur des feuillures se trouve au sommet des arcs respectivement convexes et concaves;
- l'une au moins des deux parties est faite en un matériau ayant une épaisseur variable;
- l'une au moins des deux parties présente des nervures de renforcement;
- les nervures de renforcement sont creuses;
- les nervures de renforcement contiennent un matériau de remplissage tel qu'une mousse synthétique éventuellement armée, un réseau alvéolaire ou analogue;
- l'ensemble consiste en un contenant tel qu'un bagage, un conteneur ou analogue et présente extérieurement des organes de glissement tels que des patins, avantageusement réalisés en une seule pièce avec l'ensemble proprement dit.

L'invention sera mieux comprise par la description détaillée ci-après faite en référence au dessin annexé. Bien entendu, la description et le dessin ne sont donnés qu'à titre d'exemple indicatif et non limitatif.
La figure 1 est un schéma illustrant la déformabilité des ensembles de la technique connue.
La figure 2 est un schéma illustrant le principe de l'indéformabilité d'un ensemble conforme à l'invention.
La figure 3 est une vue schématique en perspective d'une valise réalisée conformément à l'invention, représentée en position de fermeture.
La figure 4 est une vue schématique en perspective de la valise de la figure 3, représentée en position d'ouverture.
La figure 5 est une vue schématique partielle faite en coupe selon la ligne V - V de la figure 4 et montrant un mode de réalisation particulier des feuillures, lorsque la valise est en position entre ouverte.
La figure 6 est une vue schématique analogue à celle de la figure 5, montrant les feuillures interpénétrées lorsque la valise est en position de fermeture.
La figure 7 est une vue schématique partielle en coupe montrant un autre mode de réalisation des feuillures, lorsque la valise est en position entre ouverte.
La figure 8 est une vue schématique analogue à celle de la figure 7, montrant les feuillures interpénétrées lorsque la valise est en position de fermeture.
La figure 9 est une vue schématique de face d'une valise réalisée conformément à l'invention et dont les feuillures sont dissimulées.
La figure 10 est une vue schématique de la valise de la figure 9, vue du côté d'une articulation reliant les deux parties de la valise, corps et couvercle.
La figure 11 est une vue schématique en coupe transversale d'une valise conforme à l'invention et montrant une mode de réalisation particulier d'une articulation reliant les deux parties de la valise, corps et couvercle.
La figure 12 est une vue schématique en perspective montrant l'application de l'invention à un ordinateur portable.
La figure 13 est une vue schématique en perspective montrant l'application de l'invention à un appareil de prises de vues photographiques.
La figure 14 est une vue schématique d'une partie d'un ensemble conforme à l'invention et montrant certaines caractéristiques additionnelles.
La figure 15 est une vue schématique partielle montrant des nervures de raidissage de type cloisonné.
La figure 16 est une vue schématique partielle montrant des nervures de raidissage de type sandwich.
La figure 17 est une vue schématique en coupe transversale d'un ensemble conforme à l'invention, composé de deux coques solidaires.
La figure 18 est une vue schématique partielle d'une voiture automobile équipée d'un compartiment moteur et d'un capot réalisés conformément à l'invention.
La figure 19 est une vue schématique partielle d'une voiture automobile équipée d'un habitacle et de portières réalisés conformément à l'invention.
La figure 20A est une vue schématique partielle en coupe montrant un exemple d'une glace de portière pour véhicule, ayant un espace interne et conforme à l'invention.
La figure 20B est une vue schématique partielle en coupe montrant un exemple d'une glace de portière pour véhicule, ayant une partie centrale à double vitrage et des rebords de renforcement.
La figure 21 est une vue schématique de face d'une porte conforme à l'invention, dont le battant en position de fermeture est encastré dans le dormant.
La figure 22 est une vue schématique en coupe d'une porte conforme à l'invention, à deux battants opposés qui, en position de fermeture, sont encastrés dans le dormant et sont maintenus dans cette position par une dépression d'air.
Les figures 23 et 24 sont des vues schématiques respectivement de face et en coupe d'un mode de réalisation particulier de l'invention.
La figure 25 montre schématiquement une valise conforme à l'invention, ayant une forme générale de galet dissymétrique.
La figure 26 montre la valise de la figure 25 en cours de transport par roulage.
La figure 27 est une vue schématique partielle d'un ensemble conforme à l'invention muni de patins de glissement.

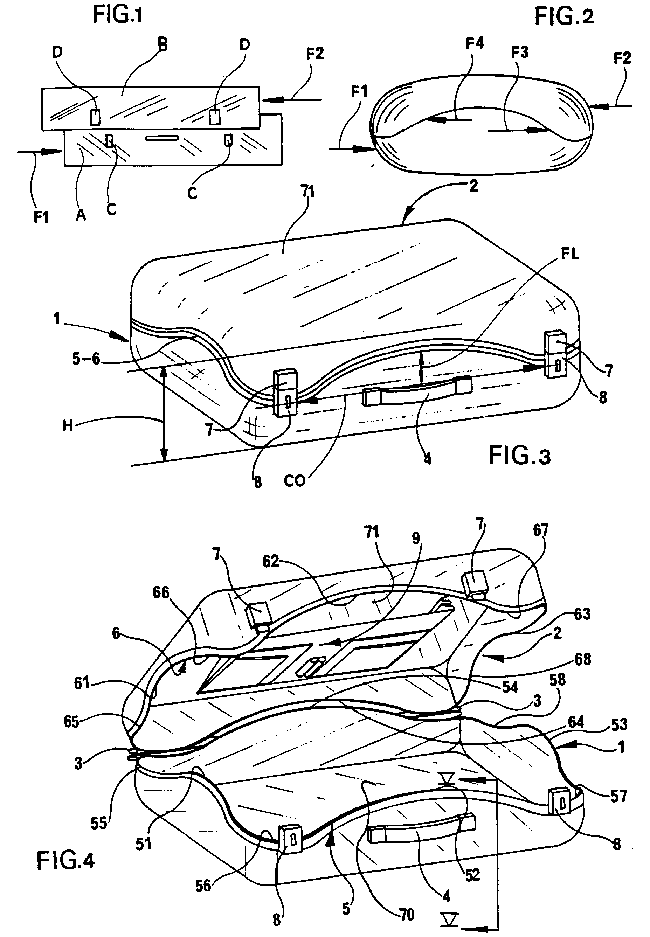

L'état de la technique classique est illustré par le schéma de la figure 1 qui montre une valise vue de face, lorsqu'elle est soumise à une force extérieure (par exemple une chute accidentelle) ayant pour résultat un mouvement relatif latéral du corps A et du couvercle B. Cela est symbolisé par les flèches F1 et F2.

La résistance à une telle force dépend essentiellement de celle des organes de fermeture C-D car les rebords (non détaillés et bien connus) sont notoirement insuffisants.

La conséquence de ces faiblesses de structure est que la valise s'ouvre de manière intempestive, les organes de fermeture C-D cédant ou se cassant, les rebords se séparant.

En observant maintenant la figure 2, on voit une valise équivalente à celle de la figure 1 mais réalisée conformément à l'invention.

Quand une telle valise est soumise à la même force extérieure, les efforts selon F1 et selon F2 sont renvoyés respectivement selon la flèche F3 et selon la flèche F4 sur la feuillure courbe centrale et, à moins développer une force colossale qui ferait éclater la valise par destruction de ses parois, les parties interpénétrées des feuillures courbes s'opposent radicalement à tout mouvement relatif latéral.

Pour une valise conforme à l'invention, les organes de fermeture ne servent qu'à maintenir rapprochés le corps et le couvercle et ne participent que très faiblement à la résistance aux sollicitations extérieures.

En se reportant maintenant aux figures 3 à 6, on voit un mode de réalisation de l'invention appliqué à la constitution d'une valise, du type connu comprenant un corps 1 et un couvercle 2, réunis par une articulation 3, le corps 1 étant muni d'une poignée de préhension 4.

Les parties destinées à coopérer l'une avec l'autre sont donc, ici, mobiles.

Le corps 1 et le couvercle 2 sont concaves puisque, par nature, la valise doit contenir divers articles, de sorte qu'ils coopérent bord à bord par leur périphérie au moyen de feuillures qui s'interpénètent, ainsi qu'on le décrira en détail plus loin.

La valise a un contour rectangulaire assez classique et comporte une feuillure continue 5 qui s'étend sur les quatre côtés du corps 1 et sa contrepartie 6 qui s'étend sur les quatre côtés du couvercle 2.

Les feuillures 5 et 6 ont un profil ondulé donnant à la feuillure 5 du corps 1 quatre parties courbes en arc convexes 51, 52, 53 et 54 ainsi que quatre parties courbes en arc concaves 55, 56, 57 et 58 qui correspondent respectivement à quatre parties concaves 61, 62, 63 et 64 et à quatre parties convexes 65, 66, 67 et 68 de la feuillure 6 du couvercle 2.

Si l'on assimile le fond 70 du corps 1 et le fond 71 du couvercle 2 à un plan, ce terme étant pris dans son acception la plus large (et non pas dans celle de stricte définition géométrique), on remarque que les portions convexes et les portions concaves sont dans un alignement sensiblement perpendiculaire à ces plans puisqu'ici le corps 1 et le couvercle 2 coopérent bord à bord, à la manière d'une mâchoire.

Dans la position de fermeture représentée sur la figure 3, les feuillures 5 et 6 coopérent intimement, quel que soit le système d'interpénétration choisi, et les courbures du profil ondulé qui se situent dans des plans substantiellement verticaux (en considérant les figures 3 et 4), s'opposent énergiquement à tous les déplacements latéraux entre le corps 1 et le couvercle 2, quelles que soient les contraintes auxquelles la valise pourrait être soumise.

L'important est d'empêcher les mouvements latéraux, c'est-à-dire ceux qui ont une résultante horizontale (en considérant les figures 3 et 4), ce qui se ramène d'un strict point de vue géométrique à considérer les deux dimensions d'un seul plan.

En conséquence, il pourrait suffire de prévoir des feuillures sur deux côtés seulement, l'important étant finalement qu'au minimum deux feuillures soient décalées angulairement, de préférence mais non exclusivement à 90°.

Ces considérations sont plus ou moins significatives selon les applications.

On comprend avec l'exemple de la valise des figures 3 et 4 que l'invention permet de réaliser une fermeture extrêmement efficace, autant que peut l'être la solidarisation d'une huître et de son couvercle.

Il en résulte un avantage important : dès lors que l'on élimine toute possibilité de mouvement relatif latéral entre les deux parties (corps 1 et couvercle 2 dans le cas de la valise des figures 3 et 4), il devient possible de les réunir l'une à l'autre par des moyens beaucoup plus simples que ceux que l'on utilise actuellement car ils ne sont plus sollicités que dans le seul sens de la séparation des deux parties et non plus, en outre, dans les deux directions du plan horizontal (en considérant les figures 3 et 4) et dans les quatre sens opposés deux à deux de chacune de ces deux directions.

On a représenté sur les figures 3 et 4 deux paires d'organes 7 et 8 disposés en applique près des coins de la valise mais toute autre solution peut, bien entendu, être adoptée.

Le profil ondulé n'affecte en rien les fonctions habituelles de la valise qui peut être garnie de différents accessoires classiques comme des pochettes de rangement 9 que l'on a représentées à l'intérieur du couvercle 2 (figure 4).

En revanche, l'invention permet de nouvelles variations esthétiques en jouant soit sur une minoration, soit sur une majoration de l'effet visuel produit par les feuillures à profil ondulé 5 et 6.

A cet égard, on peut prévoir un nombre plus ou moins grand d'ondulations des feuillures 5 et 6, sachant que du seul point de vue utilitaire, comme indiqué plus haut, il suffit de prévoir des feuillures courbes sur deux côtés non parallèles, chacune d'elles étant formée par deux contreparties convexes-concaves.

Sur un côté, il suffit donc d'une partie convexe entourée de deux parties concaves, devant coopérer avec une partie concave entourée de deux parties convexes.

On remarque sur les figures 3 et 4 que la valise a des coins arrondis, de sorte que les parties concaves 55, 56, 57 et 58 sur le corps 1 ainsi que les parties convexes 65, 66, 67 et 68 du couvercle 2 s'étendent sur deux côtés à la fois mais il ne s'agit que d'un mode de réalisation particulier, susceptible d'être remplacé par un autre tout à fait différent qui prévoirait des angles marqués, voire aigüs, les feuillures étant nettement localisées sur les côtés proprement dits.

Cependant, pour des raisons de résistance aux sollicitations extérieures, il est préférable que les sommets du polygone (ici les quantre coins d'un rectangle) soient arrondis, convexes et raccordés aux deux faces adjacentes afin d'obtenir un effet de voûte.

Ces coins arrondis peuvent avoir une courbure plus ou moins complexe et peuvent, aussi, être une fraction de sphère.

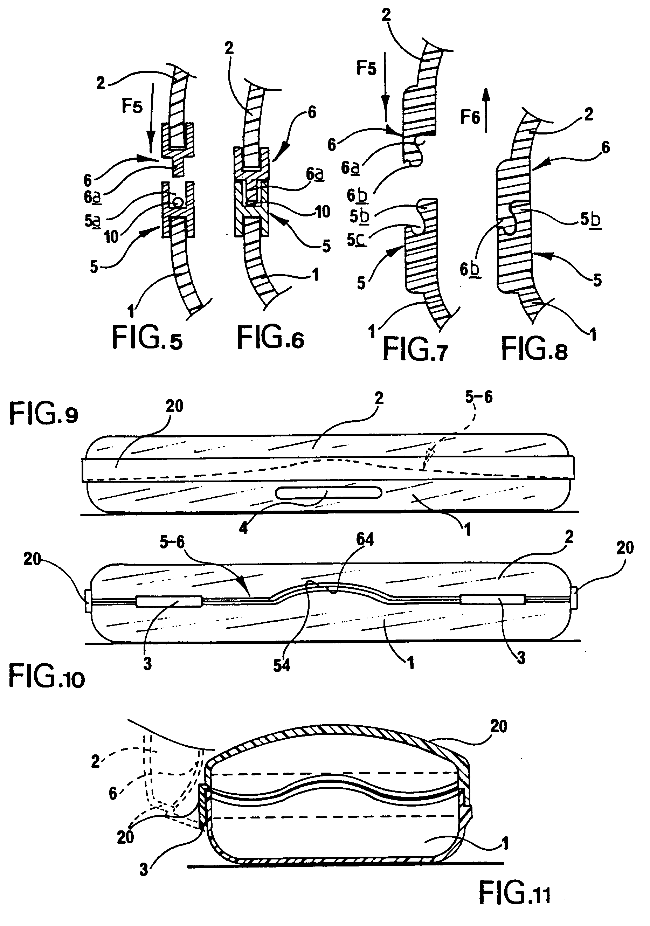

Sur les figures 5 et 6, on a représenté un exemple de feuillures selon lequel la feuillure 5 a une section en H présentant une rainure 5a tandis que la feuillure 6 présente une languette 6a dont les dimensions sont coordonnées à celles de la rainure 5a.

Les feuillures 5 et 6, par exemple en métal, sont assujetties au corps 1 et au couvercle 2 par sertissage, collage ou autre moyen connu. Lorsque l'on abaisse le couvercle 2 vers le corps 1 selon la flêche F5 pour fermer la valise, le couvercle 2 pivote selon l'articulation 3 et la languette 6a de la feuillure 6 pénètre dans la rainure 5a (figure 6), ce qui correspond à la position de fermeture.

L'emprisonnement de la rainure 6a dans la rainure 5a empêche tout mouvement latéral localisé entre les feuillures 5 et 6, mouvement qui pourrait résulter, par exemple, d'une tentative frauduleuse d'effraction visant à ouvrir la valise de force, faute de pouvoir faire jouer normalement les organes 7-8 verrouillés par le légitime possesseur.

Pour obtenir une fermeture étanche, on prévoit un joint élastique 10 collé dans le fond de la rainure 5a.

Sur les figures 7 et 8, on a représenté un autre type de feuillures selon lequel la feuillure 5 et la feuillure 6 sont en une seule pièce avec le corps 1 et avec le couvercle 2. Ces feuillures 5 et 6 présentent des rebords décalés respectivement 5b et 6b déterminant des encoches également décalées 5c et 6c à sections complémentaires, le rebord 6b ayant des formes et des dimensions correspondant à celles de l'encoche 5c.

Lorsque l'on abaisse le couvercle 2 vers le corps 1 selon la flêche F5 pour fermer la valise, le couvercle 2 pivote selon l'articulation 3 et le rebord 6b de la feuillure 6 se place dans l'encoche 5c de la feuillure 5 et, symétriquement, le rebord 5b de la feuillure 5 se place dans l'encoche 6c de la feuillure 6 (figure 8), ce qui correspond à la position de fermeture.

Lors de la fermeture de la valise, le rebord 6b se place dans l'encoche 5c par déformation élastique de la matière constitutive.

Lors de l'ouverture de la valise, le rebord 6b s'extrait de l'encoche 5c également par déformation élastique, ce qui suppose que l'on déploie un effort dans le sens de la flêche F6, effort qui peut être appliqué à un organe formant point d'appui (non représenté) tel qu'un relief, un anneau, etc.

Pour obtenir une fermeture étanche, on peut prévoir un joint élastique situé dans le fond des encoches 5c et 6c.

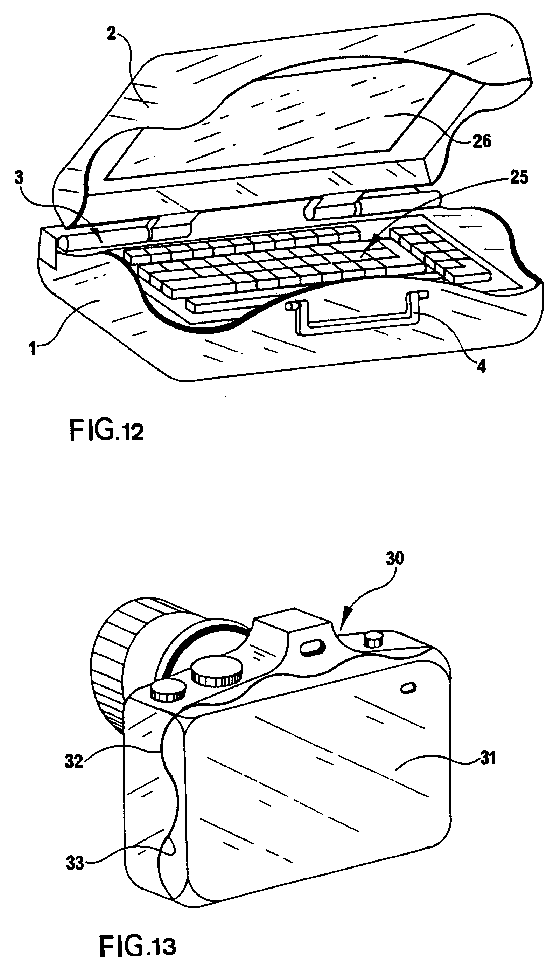

Les figures 9 et 10 illustrent un mode de réalisation d'une valise selon lequel on minore l'effet visuel, comme évoqué plus haut, du profil ondulé des feuillures 5 et 6.

Le corps 1 (ou le couvercle 2) est solidaire d'un bandeau 20 à bords rectilignes situé en applique devant la ligne courbe des feuillures 5 et 6 afin de les masquer l'une et l'autre lorsque la valise est en position de fermeture.

Le bandeau 20 est visible sur la face "avant" de la valise, là où se trouve la poignée de préhension 4, et sur les côtés.

Du point de vue esthétique, on donne ainsi à la valise un aspect traditionnel et du point de vue utilitaire, on renforce la sécurité car on rend pratiquement inaccessibles les feuillures 5 et 6 que l'on ne peut atteindre qu'après destruction du bandeau 20.

Or, ce bandeau 20 peut être réalisé de manière particulièrement robuste s'il est une partie constitutive d'une carcasse métallique monobloc (non représentée) qui sert de structure rigide à la valise tout entière, ainsi que cela est connu en soi.

Sur la figure 10, on voit la partie "arrière" de la valise, là où se trouve l'articulation 3 qui, ici est en deux parties.

Il est clair que si le bandeau 20 laisse apparente la partie arrière de la valise, la sécurité obtenue est médiocre puisque les feuillures 5 et 6 sont directement exposées et accessibles.

Mais, en revanche, l'articulation (ou les articulations) 3 est un élément de renforcement très efficace qui peut s'opposer puissament à des tentatives d'effraction consistant à insérer un outil entre les feuillures 5 et 6 en vue de les écarter en faisant levier.

Ce renforcement est d'autant plus efficace que l'axe d'articulation est bien protégé et inaccessible.

La présence des parties 54 et 64 à l'arrière de la valise peut ne pas être indispensable, ainsi qu'on l'a explicité plus haut, du moment que la partie avant possède bien des feuillures 5-6 à profil ondulé car celles-ci peuvent suffire à s'opposer aux efforts dirigés latéralement dans un sens qui correspond à un glissement relatif longitudinal du corps 1 et du couvercle 2.

Dans ce cas, on peut déporter vers le bas l'articulation 3 et prévoir le bandeau 20 au-dessus de celle-ci, comme cela est représenté sur la figure 11.

Bien entendu, l'invention n'est pas limitée à la réalisation de bagages tels que des valises.

Ainsi, par exemple, l'invention permet de réaliser des coffrets spécialement conçus pour certains appareils : sur la figure 12 on a représenté un ordinateur portable dont les commandes 25 sont dans le corps 1 et l'écran 26 dans le couvercle 2, l'articulation 3 étant de type permettant le transfert d'instructions et d'informations depuis les commandes 25 jusqu'à l'écran 26.

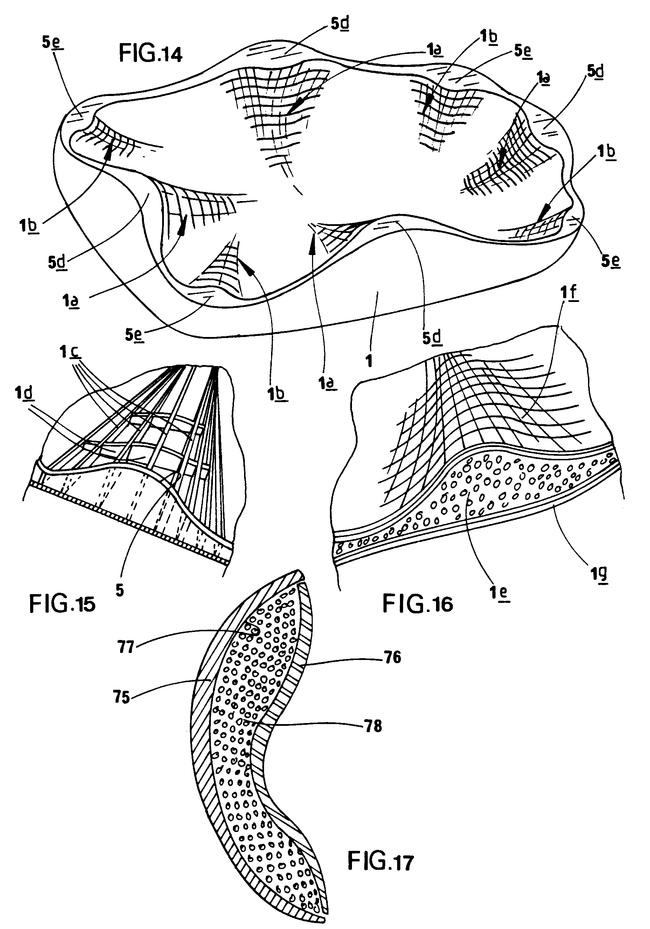

Sur la figure 13, on a représenté un appareil de prise de vues photographiques comprenant un corps 30 contenant tous les éléments voulus et un compartiment devant recevoir les pellicules sensibles fermé par une porte 31.

Le corps 30 et la porte 31 présentent des feuillures 32-33 à profil ondulé du même type que celui qui a été décrit en regard des figures 2 à 8 et que l'on ne décrira donc pas en détails.

Les feuillures 32 et 33 peuvent avoir des sections variées, différentes ou pas de celles des figures 5 à 8, en fonction des impératifs spécifiques à cette application, notamment vis-à-vis de l'étanchéité à la lumière, ces dispositions étant à la portée de l'homme de métier.

On comprend que la très grande résistance que l'invention apporte à tout ensemble comportant des parties mobiles est particulièrement appréciable pour des appareils délicats et en même temps facilement exposés à des chocs, ce qui est précisément le cas des appareils optiques et électroniques tels que les appareils de prise de vues photographiques, cinématographiques et vidéo, le matériel de transmission radio, le matériel médical et chirurgical, etc.

Une application particulièrement intéressante de l'invention concerne les véhicules.

Sur la figure 3, on remarque que le profil ondulé des feuillures est formé d'arcs successifs et inversés mais selon une très faible amplitude, c'est-à-dire que la flèche FL est nettement plus courte que la corde CO de l'arc correspondant.

Dans la pratique, la flèche FL ne représente qu'une petite fraction de la corde CO.

Sur la figure 3, la flèche est égale à environ 1/7 de la corde CO mais on peut imaginer que cette proportion tombe à 1/100.

Sur les petits côtés de la valise, l'amplitude de la courbe est un peu plus marquée et est de l'ordre de 1/4.

En tous cas, ce que l'on recherche est un effet de voûte puisque l'on souhaite aussi, bien sûr, donner à la valise une grande résistance à l'écrasement "vertical".

C'est donc une caractéristique de l'invention que d'avoir un petit nombre d'arcs sur chaque côté de la valise, voire un seul comme cela est représenté sur les figures 2 à 12. Sur les figures 2 à 4, chaque côté de la valise n'a qu'un seul arc central placé entre deux arcs plus courts situés aux coins et s'étendant en courbe pour raccorder les faces frontales et latérales.

Les grands côtés du boîtier de l'appareil représenté sur la figure 13 ont chacun deux arcs dans un sens et trois dans l'autre.

Par rapport à la hauteur H, la hauteur de la flèche FL est d'environ 2/3 mais il ne s'agit pas d'une condition rigide, l'invention permettant en ce domaine de nombreuses variantes.

En se reportant à la figure 14, on voit une seule partie d'un ensemble conforme à l'invention, pour faciliter la compréhension du dessin.

Il pourrait s'agir, en particulier, du corps 1 d'une valise et l'on voit qu'il présente des feuillures 5 de largeur variable.

Les parties les plus larges se trouvent aux sommets des arcs convexes et concaves, les parties larges 5d étant au milieu des quatre faces du corps 1 et les parties larges 5e, pas nécessairement égales aux parties 5d, aux angles du corps 1.

Les parties étroites 5f se trouvent bien sûr entre deux parties larges 5d-5e et l'ensemble est harmonieusement continu.

Ici, on remarque que le corps 1 a des parois d'épaisseur variable car on prévoit des nervures de renforcement 1a qui se raccordent aux parties larges 5d des feuillures 5 et 1b qui se raccordent aux parties larges 5e.

On réalise ainsi un corps extrêmement résistant puisque les suépaisseurs des nervures 1a et 1b sont formées par un surplus de matière judicieusement situé aux endroits les plus exposés.

Sur la figure 14, on suppose que le corps 1 est moulé en une seule pièce, par exemple en matériau composite, de sorte que les nervures 1a et 1b sont pleines.

On peut préférer une autre solution, pour des raisons de prix de matière ou pour des raisons de poids.

Sur la figure 15, on a représenté une variante selon laquelle une nervure de type 1a ou 1b est formée de plusieurs cloisons 1c qui divergent depuis une zone centrale du corps 1 vers une feuillure 5 ici de largeur constante, et de cloisons 1d transversales et parallèles entre elles.

Sur la figure 16, on a représenté une solution du type "sandwich" selon la quelle une nervure de type 1a ou 1b est formé par une matière de remplissage 1e placée entre deux épaisseurs d'un matériau composite 1f et 1g.

La matière de remplissage 1e peut être une mousse synthétique, un agglomérat de billes, etc. ou être formée par un réseau alvéolaire, notamment en nid d'abeilles.

Les nervures peuvent aussi être creuses et vides.

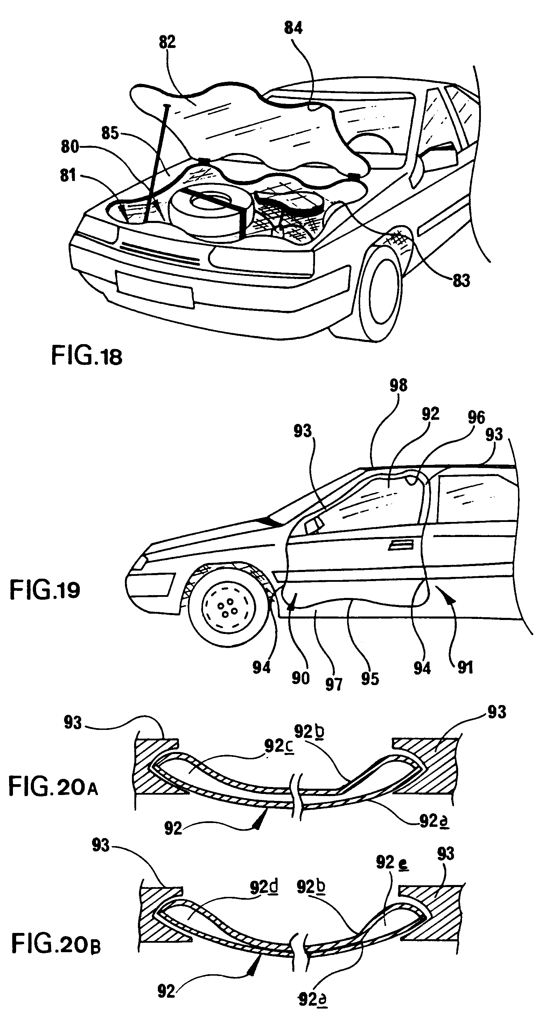

La figure 17 représente une variante de l'invention selon laquelle les deux parties distinctes ne sont pas mobiles l'une par rapport à l'autre.

Ici, l'ensemble obtenu est une structure composée de deux coques 75 et 76 assemblées par leurs périphéries et dont la forme détermine un espace intérieur 77.

On peut vouloir renforcer cette structure pour la protéger contre l'écrasement et plusieurs solutions sont possibles :

Les coques 75 et 76 peuvent présenter, sur celle de leurs faces destinée à être la face interne, des entretoises prenant appui soit sur la face interne de l'autre coque, soit sur les entretoises de l'autre coque.

Il est possible, aussi, de remplir l'espace intérieur 77 avec une matière ad hoc 78, comme représenté ici.

Sur la figure 18, on a représenté l'avant d'un véhicule de tourisme ayant un appareil moteur 80 placé dans un compartiment 81 fermé par un capot 82.

Les bords du compartiment 81 présentent une feuillure 83 à profil ondulé correspondant à celui d'une feuillure 84 prévue à la périphérie du capot 82.

On voit qu'ici les parties mobiles constituées par le compartiment moteur 81 et par le capot 82 ne doivent pas coopérer bord à bord car le capot 82 est substantiellement plat.

En position de fermeture, le capot 82 se place donc dans un plan qui est dans le prolongement de celui de l'entourage 85 du compartiment moteur 81.

Ici encore, il faut prendre le mot "plan" dans l'acception la plus large du terme car, le plus souvent, l'avant d'un véhicule a des formes galbées et l'ensemble constitué par l'entourage 85 et le capot 82 fermé constitue un tout harmonieux, répondant à des impératifs esthétiques et aérodynamiques.

Le capot 82 doit, par conséquent, être en continuité avec les autres parties de la carrosserie et c'est cela que l'on a voulu exprimer de manière synthétique en caractérisant cette structure particulière de l'invention par la notion de plans situés dans le prolongement l'un de l'autre, qu'il s'agisse de surfaces planes ou de surfaces courbes.

Les bords du capot 82 sont eux-mêmes dans le prolongement du capot 82 proprement dit et les portions concaves et convexes des feuillures 84 sont aussi dans le prolongement du capot 82.

Cette structure est, par conséquent, différente de celle qui a été décrite en regard des figures 2 à 13, les portions concaves et convexes se situant non plus selon un alignement perpendiculaire au plan des parties mobiles mais, au contraire, à plat, dans le prolongement du plan de chacune de ces parties mobiles.

En position de fermeture, le capot 82 semble en quelque sorte encastré dans l'entourage 85.

On sait combien la partie avant des véhicules est exposée aux chocs et l'invention est particulièrement efficace pour éviter les déformations dues à des chocs faibles ou moyens, car le capot 82 est rigidifié par le compartiment 81 et le compartiment 81 est rigidifié par le capot 82, du fait de l'interpénétration des feuillures 83 et 84.

En effet, les parties convexes et concaves des feuillures 83-84 interpénétrées s'arc-boutent mutuellement et s'opposent aux mouvements relatifs entre le compartiment 81 et le capot 82, sous l'effet de chocs accidentels qui sont pratiquement toujours dirigés parallélement au sol, c'est-à-dire sensiblement selon un plan.

Sur la figure 19, on a représenté un véhicule de tourisme ayant une portière d'accès sur chacun de ses côtés, seule la portière gauche 90 étant visible sur le dessin.

L'utilité des ceintures de sécurité provient du constat que les dangers de blessures graves et de mort sont considérablement diminués si les personnes sont maintenues à l'intérieur d'un véhicule accidenté plutôt que d'être projetées à l'extérieur.

Or, en cas de choc accidentel violent, les portières s'ouvrent souvent et privent ainsi les passagers d'une protection qui les isolaient de l'extérieur.

Cette ouverture intempestive est d'autant plus à redouter que les organes de fermeture (penne et gâche) sont pratiquement ponctuels et s'opposent très peu à une ouverture forcée, dès lors que sous l'effet d'un choc frontal, la portière est déformée dans le sens de son "gonflement" effet qui est de la famille du "flambage".

L'invention est donc particulièrement utile pour cette application, et l'on voit sur la figure 19 que la portière 90 coopère avec la carrosserie 91 par des feuillures à profit ondulé que l'on ne re-décrira pas puisqu'elles sont du même type que celui de la figure 18.

Ici, on se trouve devant un problème spécifique provenant de la présence d'une glace 92 qui doit pouvoir être abaissée pour être éclipsée à l'intérieur de la portière 90, cela ayant des conséquences sur les formes de la portière 90.

Les bords verticaux de la glace 92 étant généralement rectilignes, il faut qu'en position haute représentée sur la figure 19 les bords de la baie soient également rectilignes.

Pour cela, on peut facilement combiner des guides rectilignes et des bords de portière munis de feuillures ondulées, dès lors que les guides rectilignes se trouvent à l'intérieur du contour des bords de portière. Néanmoins, cela entraîne la présence de zones pleines 93 entre les guides rectilignes et les bords ondulés.

Une autre solution consiste à prévoir que les bords de portières qui délimitent la baie de la portière 90 sont rectilignes, ce qui n'anéantit pas les avantages de l'invention car, ainsi qu'on l'a explicité plus haut en regard des figures 3 et 4, la seule condition nécessaire à la mise en oeuvre de l'invention est que les parties mobiles l'une par rapport à l'autre (ici la portière 90 et la carrosserie 91) coopérent au moyen de feuillures ondulées présentes sur deux côtés non parallèles, condition qui est remplie par les bords courbes 94 prolongeant vers le bas les bords rectilignes de la baie, ainsi que par le bord inférieur 95.

Par souci de renforcement, compte tenu de la gravité des risques courus, il est bon de ne pas se contenter du minimum théorique mais au contraire d'aller aussi loin que possible dans l'efficacité. Aussi, quelle que soit la solution adoptée pour résoudre le problème exposé ci-dessus de la mobilité de la glace 92, il est bon de prévoir le bord supérieur 96 de la portière 90 avec des feuillures ondulées, ainsi que cela est représenté.

La figure 20A représente, en coupe horizontale, une portière de véhicule du type représenté sur la figure 19.

La glace 92 est formée d'un ensemble conforme à l'invention, c'est-à-dire qu'elle comprend deux coques 92a et 92b en matériau transparent, convenablement galbées, réunies par leurs périphéries et déterminant un espace interne 92c.

Celui-ci peut être vide et l'air qu'il contient contribue à l'isolation thermique du véhicule.

Il peut aussi être rempli au moyen de tout fluide voulu.

La figure 20B est une vue analogue à la figure 20A mais ici les deux coques 92a et 92b sont appliquées l'une contre l'autre dans leur partie centrale, pour créer un double vitrage qui ne modifie pas les caractéristiques de visibilité par transparence.

Les deux coques 92a et 92b déterminent des nervures latérales creuses (ici sans matière de remplissage) 92d et 92e constituant des renforts aptes à résister à des sollicitations telles que des chocs ou des vibrations intenses lors d'une collision.

On observe que les bords "horizontaux" inférieur 95 et supérieur 96 sont situés respectivement près de la partie inférieure de carrosserie dite "bas de caisse" 97 et près du toit 98. Ces éléments de carrosserie, surtout le bas de caisse 97, peuvent être particulièrement robustes et rigides, voire renforcés, de sorte que l'emboitement des feuillures sur les côtés 94 est extrêmement solide et donne à la portière 90 une résistance aux chocs de valeur inconnue à ce jour.

L'invention appliquée aux véhicules est évidemment très recommandée pour les véhicules très exposés : poids lourds, voitures de compétition, véhicules tous terrains, véhicules militaires et de police etc.

Comme on l'a vu plus haut, l'efficacité de l'accouplement des parties mobiles au moyen de feuillures à profil ondulé est telle que les organes mécaniques par lesquels les parties mobiles sont maintenues en position de fermeture peuvent être simplifiés, du fait qu'ils n'ont plus à encaisser les efforts latéraux (qui sont repris par les ondulations convexes-concaves).

Cette efficacité permet de réaliser des contenants destinés à des matériels et objets sensibles, fragiles, délicats ou très onéreux.

A titre d'exemple, on peut citer les instruments de musique, tout particulièrement les instruments à cordes tels que les violons.

De tels contenants peuvent recevoir toutes sortes d'aménagements intérieurs : alvéoles, cales, organes de maintien etc. qu'ils soient rapportés ou venus de moulage avec le corps et/ou avec le couvercle.

Par ailleurs, il y a des cas où l'on doit réaliser une fermeture extrêmement résistante en raison des risques graves d'effraction.

C'est le cas des portes de certains locaux, des portes de chambres fortes, etc.

La conception même de l'invention permet de réaliser de telles portes avec une robustesse et une sécurité d'emploi exceptionnelles.

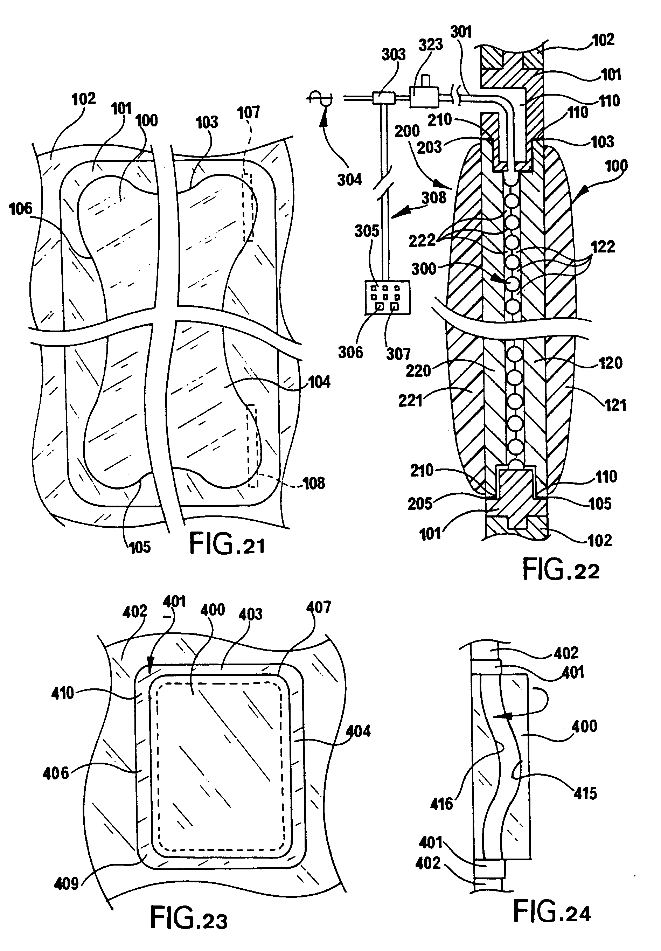

Sur la figure 21, on a représenté schématiquement une porte ayant un battant 100 et un dormant 101 asujetti à une paroi 102. La battant 100 coopére avec le dormant 101 par des feuillures à profil ondulé 103, 104, 105 et 106 sur chacun des quatre côtés de la porte, feuillures qui sont du même type que celui des figures 18 et 19, c'est-à-dire à encastrement et non bord à bord.

Le battant 100 est monté pivotant par rapport au dormant 101 au moyen d'articulations 107 et 108 de tout type connu.

Cette structure à emboîtement complique beaucoup l'effraction qui serait tentée par des personnes hostiles en utilisant des leviers insérés entre battant et dormant.

En effet, tout effort exercé sur l'un des quatre côtés et ayant une résultante, même faible, dirigée parallèlement au plan du battant 100 a pour conséquence un arc-boutement des feuillures des trois autres côtés.

Pour parvenir à déplacer le battant 100 par rapport au dormant 101, il faudrait exercer un effort d'extraction sur les quatre côtés à la fois, à condition encore d'avoir un point d'appui suffisant, c'est-à-dire une prise solide sur les feuillures, mais l'homme de métier sait minimiser ce risque.

Le moyen d'effraction le plus simple est évidemment de manoeuvrer la serrure que l'on trouve habituellement sur les portes.

Selon l'invention, on supprime toute serrure en utilisant pour le blocage du battant 100 la force très puissante d'une dépression d'air, ce que l'on illustre par le schéma de la figure 22.

La porte complète possède deux battants 100 et 200, situés de part et d'autre d'un même dormant 101 afin de déterminer un espace médian 300.

Le battant 200 est identique que battant 100 et possède également quatre feuillures, dont seules sont visibles le dessin la feuillure supérieure 203 et la feuillure inférieure 205.

Le long des feuillures, se trouvent deux joints élastiques continus 110 pour le battant 100 et 210 pour la battant 200, afin d'obtenir une bonne étanchéité entre le dormant 101 et les battants 100 et 200 lorsque ceux-ci sont en position de fermeture, qui est celle représentée sur la figure 22.

Le dormant 101 présente un passage 111 qui communique avec l'espace médian 300 et qui reçoit un conduit 301 relié à une pompe à vide 302 associée à un boitier de commande et d'alimentation 303 contenant des composants et circuits électriques et électroniques et relié à une source de courant 304.

Le boitier 302 est relié à un dispositif de contrôle 305 réalisé ici sous forme d'un clavier alphanumérique permettant l'utilisation d'un code confidentiel.

Le fonctionnement de cette porte est le suivant : enposition de fermeture des battants 100 et 200, la délivrance du code correct au clavier 305, rend opérationnel un bouton 306 (marqué "FERMETURE") qui ferme le circuit d'alimentation de la pompe à vide 302, laquelle aspire l'air que contient l'espace 300, ce qui tend à rapprocher les battants 100 et 200 et à comprimer les joints d'étanchéité 110 et 210. Cette force retient les battants 100 et 200 d'autant plus énergiquement que le vide est poussé, ce qui dépend à la fois du degré d'étanchéité que procurent les joints 110 et 210, et des performances de la pompe 302.

Pour ouvrir la porte, il faut délivrer le code correct au clavier 305 pour rendre opérationnel un bouton 307 (marqué "OUVERTURE") qui ferme le circuit d'alimentation d'une électrovanne (non représentée) qui met le conduit 301, et donc l'espace 300, à la pression atmosphérique.

Les battants 100 et 200 sont alors libérés et peuvent être mis en position d'ouverture.

Pour cela, il faut prévoir au moins un organe de préhension mais celui-ci constitue un point vulnérable qu'il est bon de supprimer.

On prévoit alors que le boîtier de commande 302 est susceptible de commander le fonctionnement de la pompe 301 soit dans le sens de l'aspiration, soit dans le sens du refoulement.

En agissant sur le bouton 306 on provoque l'aspiration et le blocage des battants 100 et 200 en position de fermeture, tandis qu'en agissant sur la bouton 307 on provoque d'abord la suppression de la dépression puis une entrée d'air comprimé qui agit comme moteur pour écarter les battants 100 et 200 du dormant 101 et les amener ainsi en position d'ouverture.

Naturellement, il serait possible de débloquer frauduleusement les battants 100 et 200 en position de fermeture non plus par l'usage de moyens mécaniques puissants mais simplement en créent une fuite dans le conduit 301 et/ou dans l'espace 300.

Pour éviter cela, la structure doit être robuste et munie de tous moyens connus de l'homme de métier pour protéger et rendre inaccessibles les éléments sensibles.

Outre le conduit 301, la pompe 302 et le coffret 303, il serait avantageux de supprimer les fils électriques 308 que l'on a représentés ici pour relier le boîtier 303 et le clavier 305, et de les remplacer par une liaison hertzienne.

Les battants eux-mêmes peuvent être particulièrement résistant au percement, notamment en associant, comme cela est connu, du béton et de l'acier.

Ici, on a représenté une version plus simple : les battants 100 et 200 comprennent une partie interne en métal respectivement 120 et 220 et une coquille extérieure en matière synthétique 121 et 221 convenablement assujettie.

Pour minorer autant que possible la quantité d'air à aspirer et à introduire, l'espace 300 est occupé, en position de fermeture des battants 100 et 200, par des entretoises respectivement 122 et 222 fixées à la face interne des battants 100 et 200.

Placées en regard les unes des autres, elles créent ainsi une structure alvéolaire et l'on choisit le volume total des entretoises 122 et 222 de telle manière que l'on obtienne le volume vide que l'on souhaite.

Comme à l'aspiration d'air les battants 100 et 200 se rapprochent en comprimant les joints d'étanchéité 110 et 210, il faut que les entretoises 122 et 222 soient éloignées les unes des autres selon une distance égale à celle du rapprochement des battants 100 et 200 si elles sont rigides.

Si elles sont élastiques, elles peuvent être au contact les unes des autres dès la fermeture des battants 100 et 200, dès lors qu'elles peuvent céder à l'effort de compression dû aux battants 100 et 200.

Dans ce dernier cas, elles contribuent au déblocage des battants 100 et 200 car elles reprennent leur forme initiale et se repoussent dès que l'espace 300 se retrouve à une moindre dépression ou à la pression atmosphérique.

Naturellement, la structure que l'on vient de décrire peut être associée à tout moyen de commande et de contrôle différent de celui qui a été décrit, notamment en prévoyant un clavier portatif à liaison hertzienne avec le boitier de commande 303, lequel peut se trouver dans un endroit éloigné de la porte et très bien protégé.

Sur les figures 23 et 24, on a représenté un mode de réalisation de l'invention qui permet de réaliser une structure comprenant deux parties distinctes qui sont emboîtées lorsqu'elles coopérent, mais qui présentent, extérieurement, un contour de tracé indépendant du profil ondulé des feuillures.

Ici, un battant 400 doit coopérer avec un dormant 401 assujetti à une paroi 402.

Le battant 400 et le dormant 401 ont un pourtour rectangulaire dont les côtés 403, 404, 405 et 406 sont rectilignes et se raccordent par des angles arrondis 407, 408, 409 et 410.

Lorsque le battant 400 et le dormant 401 sont vus en plan, comme sur la figure 21, aucune feuillure n'est donc apparente.

Lorsque le battant 400 et le dormant 401 sont observés latéralement, en position d'ouverture totale ou partielle (cas de la figure 24), on voit que le battant 400 présente des feuillures périphériques 415 à profil ondulé, comparable à celui des figures 2 à 14, mais prévu à l'intérieur du contour rectangulaire. Bien entendu, le dormant 401 présente des feuillures 416 complémentaires afin qu'en position de fermeture, les feuillures 415 et 416 s'interpénètrent comme on l'a déjà explicité.

Ce mode de réalisation permet de combiner les avantages des feuillures à profil ondulé et des formes extérieures rectilignes.

Il peut être adopté, en particulier, pour les véhicules dont il ne change pas l'esthétique extérieure.

L'invention s'appliquant également au cas où l'on doit réunir deux parties distinctes sans pour autant qu'elles soient mobiles, on peut appliquer l'invention à la réalisation des pièces de verre qui obturent les hublots des carlingues d'avion car leur fixation doit être extrêmement robuste pour résister aux contraintes de déformation de la cellule.

Après mise en place des pièces de verre et fixation de celles-ci, notamment par collage, les efforts subis par elles parallèlement à leur plan sont encaissés par les feuillures à profil ondulé, comme on l'a décrit en regard de la figure 18.

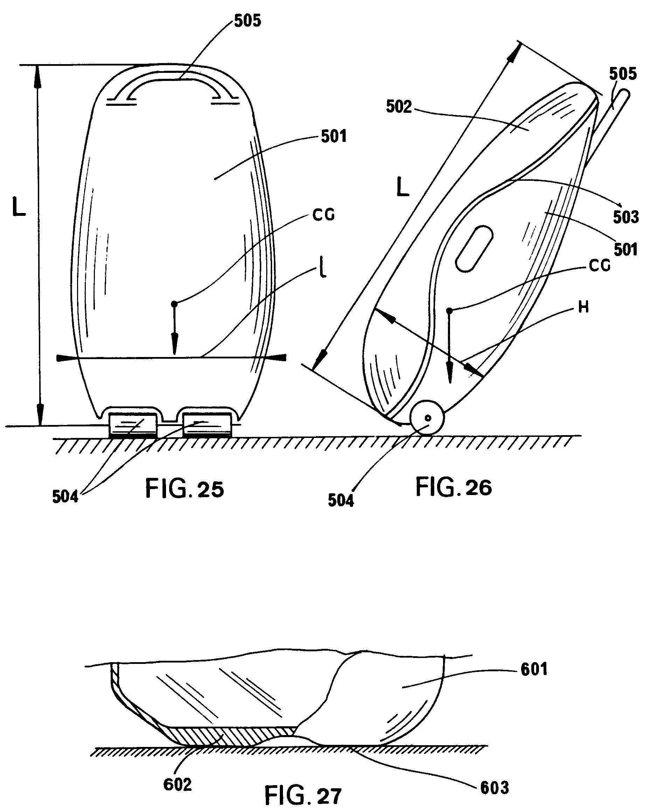

Les figures 25 et 26 illustrent un exemple de réalisation d'une valise du type connu selon lequel des roulettes, éventuellement éclipsables, et une poignée de préhension permettent de tracter la valise.

Les valises de ce type s'avèrent être peu pratiques en raison de leur instabilité, et cela quelle que soit la variante adoptée : quatre roulettes sous la valise qui lui donnent la structure d'un chariot, deux roulettes près d'une extrémité, berceau amovible etc.

Le résultat reste médiocre même si la valise est disposée selon une orientation de plus grande stabilité : à plat.

Cela est dû au fait que les valises ayant toujours sensiblement la forme d'un parallélépipède, leur centre de gravité est toujours voisin de leur centre géométrique alors que les organes qui permettent leur roulement et leur traction manuelle sont précisément placés au plus loin de ce centre : les roulettes sont évidemment placées au plus bas et la poignée au plus haut.

Par conséquent, ces valises sont toujours en équilibre instable.

La présente invention permet de résoudre ce problème particulier en abaissant de manière importante le centre de gravité.

En effet, l'invention permet de réaliser un ensemble, et en l'occurrence une valise 500, ayant sensiblement la forme générale d'un galet, comprenant deux coques 501 et 502 galbées, la première constituant le corps de la valise et la seconde son couvercle.

On ne décrira pas à nouveau la structure des feuillures que l'on a simplement évoquées par une ligne de jonction 503.

La coque 501 étant destinée à être souvent posée à plat quand la valise est utilisée normalement, c'est-à-dire quand on la remplit et quand on la vide, la face extérieure du corps 501 doit être peu galbée afin à la valise la stabilité qui lui est indispensable.

La coque 502 peut être un peu plus galbée afin de présenter une face extérieure convexe, en dôme à courbure très plate, dans le but de combiner deux effets :
- un effet de voûte procurant à la valise une grande solidité par sa résistance à l'écrasement,
- un effet de stabilité permettant à la valise une superposition stable.

Quand la valise est vue de face (figure 25) elle a un contour sensiblement rectangulaire, c'est-à-dire rectangulaire et chacun des sommets de ce polygone, aussi bien pour le corps 501 que pour le couvercle 502, est luimême à courbure convexe, raccordant parfaitement les grandes faces de la valise à ses faces latérales et jouant aussi un rôle de voûte.

Cet ensemble a donc la forme générale d'un galet, sans aucun angle aigu, et offre en toutes directions une résistance importante aux chocs et autres sollicitations extérieures.

Les coques 501 et 502 étant moulées, il est possible de les rendre dissymétriques non seulement en les considérant selon la hauteur H de la valise, mais également selon sa longueur L et sa largeur l.

On voit ainsi que la partie basse (sur le dessin) de la valise est nettement plus ventrue que la partie haute qui est affinée.

On voit sur la figure 25 que la largeur l maximum est beaucoup plus près du bas que du haut, à l'endroit où se situe également, à peu près, la hauteur H maximum (figure 26).

Si la largeur l maximum et la hauteur H maximum sont déportées vers le bas, la longueur L maximum est, au contraire, parfaitement axée pour éviter tout déséquilibre latéral.

On prévoit donc des roulettes 504 (éventuellement éclipsables par tous moyens connus) sous cette partie ventrue de la valise et une poignée de traction 505 (éventuellement éclipsable aussi, par tous moyens connus) à l'opposé, qui est la partie affinée.

C'est évidemment la partie basse de la valise qui est la plus lourde et l'on voit que le centre de gravité CG est à la fois dans l'axe vertical de la valise et nettement au-dessous de sa partie médiane.

Une valise ainsi réalisée est donc, pour la première fois, tractée en équilibre stable, le couple de renversement devenant très important et de ce fait improbable.

Sur la figure 27, on voit une variante de réalisation selon laquelle le corps 601 d'un contenant tel qu'une valise (non représentée intégralement) présente extérieurement des patins de glissement 602 et 603.

Le corps 601 étant représenté en coupe sur la partie gauche de la figure, on voit que les patins 602 et 603 peuvent être obtenus par moulage en une seule pièce avec le corps 601 et que l'on peut leur donner des formes à courbes très douces, éliminant toute partie abrupte susceptible de constituer un obstacle au déplacement du contenant par glissement sur le sol.

L'invention permet de réaliser non seulement des bagages et contenants de dimensions relativement importantes mais également des petits étuis renfermant des objets fragiles : étuis à lunettes, écrins à instruments délicats, etc.

## Revendications

1. Ensemble tel qu'un bâtiment, un véhicule, un contenant et analogue, comprenant au moins deux parties distinctes présentant au moins deux feuillures complémentaires et opposées, situées en regard et destinées à coopérer l'une avec l'autre, caractérisé en ce que les feuillures (5 et 6), sont décalées angulairement, c'est-à-dire non parallèles, et ont un profil ondulé présentant, pour chaque feuillure (5-6), au moins une portion courbe en arc convexe sur l'une des parties (1-2) et au moins une portion courbe en arc concave sur l'autre (2-1), afin que chaque arc convexe soit engagé dans un arc concave de la feuillure opposée quand les deux parties (1 et 2) sont appliquées l'une contre l'autre, portions courbes qui ont une amplitude faible, à savoir que leur arc a une flèche (FL) de longueur inférieure à la corde (CO) correspondante, l'une au moins des parties distinctes (1-2) ayant une face extérieure convexe, en dôme à courbure très plate formant voûte.

2. Ensemble selon la revendication 1, caractérisé en ce que l'arc des courbes a une flèche (FL) de longueur comprise entre 1/100 et 1/4 de la longueur de la corde (CO) correspondante.

3. Ensemble selon la revendication 1, caractérisé en ce que l'ensemble ayant une longueur L, une largeur l et une troisième dimension, hauteur ou épaisseur, H, la hauteur de la flèche (FL) de l'arc des courbes est de l'ordre de grandeur de 2/3 de H.

4. Ensemble selon la revendication 1, caractérisé en ce que les deux parties distinctes (1 et 2,30 et 31, 82 et 85, 90 et 91, 100-200 et 101, 501 et 502)) sont mobiles l'une par rapport à l'autre entre une position dite "d'ouverture" dans laquelle un passage existe entre les deux parties (1 et 2,30 et 31, 82 et 85, 90 et 91, 100-200 et 101, 501 et 502) et une position dite "de fermeture" dans laquelle les deux parties (1 et 2,30 et 31, 82 et 85, 90 et 91, 100-200 et 101, 501 et 502) sont appliquées l'une contre l'autre en obturant le passage, lorsque les deux parties (1 et 2,30 et 31, 82 et 85, 90 et 91, 100-200 et 101, 501 et 502) sont en position de fermeture.

5. Ensemble selon la revendication 1, caractérisé en ce que les parties (1 et 2,30 et 31, 82 et 85, 90 et 91, 100-200 et 101, 501 et 502) ont un contour polygonal et présentent des feuillures (5 et 6, 83 et 84, 94, 95 et 96, 103, 104, 105 et 106) sur au moins deux côtés non parallèles de leur contour.

6. Ensemble selon la revendication 5, caractérisé en ce que les parties (1 et 2,30 et 31, 82 et 85, 90 et 91, 100-200 et 101, 501 et 502) ont un contour quadrangulaire.

7. Ensemble selon la revendication 6, caractérisé en ce que les parties (1 et 2, 30 et 31, 82 et 85, 90 et 91, 100-200 et 101, 501 et 502) présentent des feuillures sur leurs quatre côtés.

8. Ensemble selon la revendication 4, caractérisé en ce que les deux parties (1 et 2, 30 et 31, 82 et 85, 90 et 91, 100-200 et 101, 501 et 502) sont articulées l'une par rapport à l'autre selon un axe de pivotement.

9. Ensemble selon la revendication 8, caractérisé en ce que l'axe de pivotement est proche de l'un des côtés des parties (1 et 2, 30 et 31, 82 et 85, 90 et 91, 100-200 et 101, 501 et 502).

10. Ensemble selon la revendication 9, caractérisé en ce que les parties (1 et 2, 30 et 31, 82 et 85, 90 et 91, 100-200 et 101, 501 et 502) présentent des feuillures sur celui de leurs côtés qui est le plus proche de l'axe d'articulation.

11. Ensemble selon la revendication 4, caractérisé en ce que les parties mobiles (1 et 2, 30 et 31, 501 et 502) doivent coopérer bord à bord, les portions en arc courbe convexe et concave étant situées selon un alignement sensiblement perpendiculaire au plan des parties mobiles (1 et 2, 30 et 31, 501 et 502) proprement dites.

12. Ensemble selon la revendication 4, caractérisé en ce que les parties mobiles (82 et 85, 90 et 91, 100-200 et 101) doivent se situer, en position de fermeture, dans des plans qui sont sensiblement dans le prolongement l'un de l'autre, de sorte que les bords sont eux-mêmes dans le prolongement desdites parties mobiles (1 et 2, 30 et 31, 501 et 502) et les portions en arc courbe convexe et concave dans le prolongement desdits bords.

13. Ensemble selon la revendication 4, caractérisé en ce que les feuillures (5 et 6) présentent des rebords décalés deux à deux et devant se placer l'un contre l'autre lorsque les deux parties (1 et 2) sont en position de fermeture.

14. Ensemble selon la revendication 1, caractérisé en ce qu'un joint souple (10) est assujetti à l'une des feuillures (5) en regard de la feuillure opposée (6).

15. Ensemble selon la revendication 4, caractérisé en ce qu'il comprend des moyens (300 à 308) destinés à rendre étanche la fermeture des deux parties (100-200 et 101), au droit des feuillures 103-203, 104-204, 105-205 et 106-206), celles-ci délimitant un espace situé entre les deux parties (100-200 et 101) lorsqu'elles sont en position de fermeture, espace qui est relié à un dispositif d'aspiration d'air (323).

16. Ensemble selon la revendication 15, caractérisé en ce que l'une des deux parties (100) au moins présente des entretoises (122) devant coopérer avec l'autre partie (200), en position de fermeture.

17. Ensemble selon la revendication 16, caractérisé en ce que les deux parties (100 et 200) présentent des entretoises (122 et 222), celles (122) d'une partie (100) devant se placer contre celles (222) de l'autre partie (200), en position de fermeture.

18. Ensemble selon la revendication 1, caractérisé en ce que les deux parties distinctes sont réunies pour être rendues non séparables et former une structure unique (92) constituée de deux coques (75 et 76, 92a et 92b).

19. Ensemble selon la revendication 18, caractérisé en ce que les coques (75 et 76, 92a et 92b) déterminent un espace interne (77 - 92c).

20. Ensemble selon la revendication 19, caractérisé en ce que l'espace interne (77 - 92c) contient des entretoises entre les coques (75 et 76, 92a et 92b).

21. Ensemble selon la revendication 19, caractérisé en ce que l'espace interne (77) contient un matériau de remplissage (78).

22. Ensemble selon la revendication 1, caractérisé en ce qu'il a la forme générale d'un galet.

23. Ensemble selon la revendication 1, caractérisé en ce que la partie ( 1-2, 501-502) qui a une face extérieure convexe, en dôme à courbure très plate a un contour polygonal, chaque sommet du polygone étant lui-même de forme courbe et convexe, se raccordant à des faces latérales substantiellement orthogonales à la face extérieure convexe.

24. Ensemble selon la revendication 23, caractérisé en ce que chaque sommet du polygone est une fraction de sphère.

25. Ensemble selon la revendication 1, caractérisé en ce que les deux parties distinctes (30 et 31, 75 et 76, 92a et 92b, 501 et 502) sont dissymétriques.

26. Ensemble selon la revendication 1, caractérisé en ce que les feuillures (5) ont une largeur variable.

27. Ensemble selon la revendication 26, caractérisé en ce que l'ensemble ayant un contour polygonal, la plus grande largeur (5d - 5e) des feuillures (5) se trouve au voisinage des sommets du polygone et/ou dans la zone centrale de ses côtés.

28. Ensemble selon la revendication 26, caractérisé en ce que la plus grande largeur (5d - 5e) des feuillures (5) se trouve au sommet des arcs respectivement convexes et concaves.

29. Ensemble selon la revendication 1, caractérisé en ce que l'une au moins des deux parties (1) est faite en un matériau ayant une épaisseur variable.

30. Ensemble selon la revendication 1, caractérisé en ce que l'une au moins des deux parties présente des nervures de renforcement (1a - 1b, 1c - 1d, 1f).

31. Ensemble selon la revendication 30, caractérisé en ce que les nervures de renforcement sont creuses.

32. Ensemble selon la revendication 31, caractérisé en ce que les nervures de renforcement (1f) contiennent un matériau de remplissage (1e) tel qu'une mousse synthétique éventuellement armée, un réseau alvéolaire ou analogue.

33. Ensemble selon la revendication 1, caractérisé en ce qu'il consiste en un contenant tel qu'un bagage, un conteneur ou analogue (601) et présente extérieurement des organes de glissement tels que des patins (602 et 603), avantageusement réalisés en une seule pièce avec l'ensemble (601) proprement dit.

## Claims

1. Assembly such as a building, a vehicle, a container and the like, comprising at least two distinct parts having at least two complementary and opposite rabbets, located facing each other and intended to co-operate with each other, characterised in that the rabbets (5 and 6) are angularly offset, that is, not parallel, and have an undulating profile having, for each rabbet (5-6), at least one portion curved as a convex arc on one of the parts (1-2) and at least one portion curved as a concave arc on the other (2-1), so that each convex arc is engaged in a concave arc of the opposite rabbet when the two parts (1 and 2) are applied against each other, which curved portions have a low amplitude, that is, their arc has a deflection (FL) of a length less than the corresponding chord (CO), at least one of the distinct parts (1-2) having a convex outer face, domed with a very flat curvature forming a vault.

2. Assembly according to Claim 1, characterised in that the arc of the curves has a deflection (FL) of a length comprised between 1/00 and 1/4 of the length of the corresponding chord (CO).

3. Assembly according to Claim 1 characterized in that, the assembly having a length L, a width l and a third dimension, height or width, H, the height of the deflection (FL) of the arc of the curves is of the order of magnitude of 2/3 of H.

4. Assembly according to Claim 1, characterised in that the two distinct parts (1 and 2, 30 and 31, 82 and 85, 90 and 91, 100-200 and 101, 501 and 502) can be moved in relation to each other between a position known as "open" in which there is a passage between the two parts (1 and 2, 30 and 31, 82 and 85, 90 and 91, 100-200 and 101, 501 and 502) and a position known as "closed" in which the two parts (1 and 2, 30 and 31, 82 and 85, 90 and 91, 100-200 and 101, 501 and 502) are applied against one another blocking the passage, when the two parts (1 and 2, 30 and 31, 82 and 85, 90 and 91, 100-200 and 101, 501 and 502) are in a closed position.

5. Assembly according to Claim 1, characterised in that the parts (1 and 2, 30 and 31, 82 and 85, 90 and 91, 100-200 and 101, 501 and 502) have a polygonal contour and have rabbets (5 and 6, 83 and 84, 94, 95 and 96, 103, 104, 105 and 106) on at least two non-parallel sides of their contour.

6. Assembly according to Claim 5, characterised in that the parts (1 and 2, 30 and 31, 82 and 85, 90 and 91, 100-200 and 101, 501 and 502) have a quadrangular contour.

7. Assembly according to Claim 6, characterised in that the parts (1 and 2, 30 and 31, 82 and 85, 90 and 91, 100-200 and 101, 501 and 502) have rabbets on their four sides.

8. Assembly according to Claim 4, characterised in that the two parts (1 and 2, 30 and 31, 82 and 85, 90 and 91, 100-200 and 101, 501 and 502) are articulated to one another along a pivotal axis.

9. Assembly according to Claim 8, characterised in that the pivotal axis is close to one of the sides of the parts (1 and 2, 30 and 31, 82 and 85, 90 and 91, 100-200 and 101, 501 and 502).

10. Assembly according to Claim 9, characterised in that the parts (1 and 2, 30 and 31, 82 and 85, 90 and 91, 100-200 and 101, 501 and 502) have rabbets on the one of their sides that is closest to the pivotal axis.

11. Assembly according to Claim 4, characterized in that the moveable parts (1 and 2, 30 and 31, 501 and 502) must co-operate edge to edge, the portions shaped as convex and concave curved arcs being located in an alignment that is substantially perpendicular to the plane of the movable parts (1 and 2, 30 and 31, 501 and 502) proper.

12. Assembly according to Claim 4, characterised in that the moveable parts (82 and 85, 90 and 91, 100-200 and 101) must be located, in the closed position, in planes that are substantially an extension from one to the other, so that the edges are themselves in the extension of said movable parts (1 and 2, 30 and 31, 501 and 502) and the portions shaped as convex and concave arcs, in the extension of said edges.

13. Assembly according to Claim 4, characterised in that the rabbets (5 and 6) have edges that are offset in twos and have to be positioned against one another when the two parts (1 and 2) are in the closed position.

14. Assembly according to Claim 1, characterised in that a flexible seal (10) is fixed to one of the rabbets (5) facing the opposite rabbet (6).

15. Assembly according to Claim 4, characterised in that it comprises means (300 to 308) intended to produce airtight closing of the two parts (100-200 and 101), directly over the rabbets (103-203, 104-204, 105-205 and 106-206), said rabbets delimiting a space located between the two parts (100-200 and 101) when they are in the closed position, which space is connected to an air suction device (323).

16. Assembly according to Claim 15, characterised in that one of the two parts (100) at least has bridging pieces (122) that have to co-operate with the other part (200), in the closed position.

17. Assembly according to Claim 16, characterised in that the two parts (100 and 200) have bridging pieces (122 and 222), the former (122) belonging to one part (100) having to be placed against the latter (222) belonging to the other part (200), in the closed position.

18. Assembly according to Claim 1, characterised in that the two distinct parts are joined so as to be made inseparable and form a single structure (92) constituted by two shells (75 and 76, 92a and 92b).

19. Assembly according to Claim 18, characterised in that the shells (75 and 76, 92a and 92b) determine an internal space (77 - 92c).

20. Assembly according to Claim 19, characterised in that the internal space (77 - 92c) contains bridging pieces between the shells (75 and 76, 92a and 92b).

21. Assembly according to Claim 19, characterised in that the internal space (77) contains a filling material (78).

22. Assembly according to Claim 1, characterised in that it has the general form of a roller.

23. Assembly according to Claim 1, characterised in that the part (1-2, 501-502) that has a convex outer face, domed with a very flat curvature, has a polygonal contour, each vertex of the polygon being itself curved and convex, connected to lateral faces substantially orthogonal to the convex outer face.

24. Assembly according to Claim 23, characterised in that each vertex of the polygon is a fraction of a sphere.

25. Assembly according to Claim 1, characterised in that the two distinct parts (30 and 31, 75 and 76, 92a and 92b, 501 and 502) are non-symmetrical.

26. Assembly according to Claim 1, characterised in that the rabbets (5) are variable in width.

27. Assembly according to Claim 26, characterised in that, where the assembly has a polygonal contour, the greatest width (5d - 5e) of the rabbets (5) is located in the vicinity of the vertices of the polygon and/or in the central zone of its sides.

28. Assembly according to Claim 26, characterised in that the greatest width (5d - 5e) of the rabbets (5) is located at the vertex of the respective convex and concave arcs.

29. Assembly according to Claim 1, characterised in that at least one of the two parts (1) is made of a material of variable thickness.

30. Assembly according to Claim 1, characterised in that at least one of the two parts has strengthening ribs (1a - 1b, 1c - 1d, 1f).

31. Assembly according to Claim 30, characterised in that the strengthening ribs are hollow.

32. Assembly according to Claim 31, characterised in that the strengthening ribs (1f) contain a filling material (1e) such as a synthetic foam, which may be reinforced, a cellular network, or similar.

33. Assembly according to Claim 1, characterised in that it consists of a container such as an item of luggage, a container or the like (601) and has, on the outside, sliding members such as runners (602 and 603), advantageously made in one piece with the assembly (601) proper.

## Patentansprüche

1. Einheit wie z.B. ein Gebäude, ein Fahrzeug, ein Behälter oder ähnliches, die mindestens zwei verschiedene Teile aufweist, welche mindestens zwei komplementäre und entgegengesetzte Falze besitzen, die einander gegenüberliegen und zusammenwirken sollen, dadurch gekennzeichnet, daß die Falze (5 und 6) winkelmäßig verschoben, d.h. nicht parallel sind und ein gewelltes Profil aufweisen, das für jeden Falz (5-6) mindestens einen in einem konvexen Bogen gekrümmten Abschnitt auf einem der Teile (1-2) und mindestens einen in einem konkaven Bogen gekrümmten Abschnitt auf dem anderen Teil (2-1) besitzt, damit jeder konvexe Bogen in einen konkaven Bogen des gegenüberliegenden Falzes eingefügt wird, wenn die beiden Teile (1 und 2) gegeneinander gelegt werden, wobei die gekrümmten Abschnitte eine geringe Amplitude aufweisen, d.h. daß der Pfeil (FL) ihres Bogens eine geringere Länge als die entsprechende Spannweite (CO) hat, und mindestens eines der verschiedenen Teile (1-2) eine konvexe Außenseite in Form einer Kuppel mit sehr flacher Krümmung besitzt, die ein Gewölbe bildet.

2. Einheit nach Anspruch 1, dadurch gekennzeichnet, daß der Bogen der Kurven einen Pfeil (FL) hat, dessen Länge zwischen 1/100 und 1/4 der Länge der entsprechenden Spannweite (CO) liegt.

3. Einheit nach Anspruch 1, dadurch gekennzeichnet, daß bei einer Einheit mit einer Länge L, einer Breite l und/oder einer dritte Dimension, Höhe oder Tiefe, H, die Höhe des Pfeils (FL) des Bogens der Kurven in der Größenordnung von 2/3 von H liegt.

4. Einheit nach Anspruch 1, dadurch gekennzeichnet, daß die beiden verschiedenen Teile (1 und 2, 30 und 31, 82 und 85, 90 und 91, 100-200 und 101, 501 und 502) zwischen einer sogenannten "Öffnungs"-Stellung, in der es zwischen den beiden Teilen (1 und 2, 30 und 31, 82 und 85, 90 und 91, 100-200 und 101, 501 und 502) einen Durchlaß gibt, und einer sogenannten "Schließ"-Stellung gegeneinander beweglich sind, in der die beiden Teile (1 und 2, 30 und 31, 82 und 85, 90 und 91, 100-200 und 101, 501 und 502) aufeinander liegen und den Durchlaß verschließen, wenn die beiden Teile (1 und 2, 30 und 31, 82 und 85, 90 und 91, 100-200 und 101, 501 und 502) in der Schließstellung sind.

5. Einheit nach Anspruch 1, dadurch gekennzeichnet, daß die Teile (1 und 2, 30 und 31, 82 und 85, 90 und 91, 100-200 und 101, 501 und 502) einen polygonalen Umriß aufweisen und Falze (5 und 6, 83 und 84, 94, 95 und 96, 103, 104, 105 und 106) auf mindestens zwei nicht parallelen Seiten ihres Umrisses besitzen.

6. Einheit nach Anspruch 5, dadurch gekennzeichnet, daß die Teile (1 und 2, 30 und 31, 82 und 85, 90 und 91, 100-200 und 101, 501 und 502) einen viereckigen Umriß aufweisen.

7. Einheit nach Anspruch 6, dadurch gekennzeichnet, daß die Teile (1 und 2, 30 und 31, 82 und 85, 90 und 91, 100-200 und 101, 501 und 502) auf ihren vier Seiten Falze aufweisen.

8. Einheit nach Anspruch 4, dadurch gekennzeichnet, daß die beiden Teile (1 und 2, 30 und 31, 82 und 85, 90 und 91, 100-200 und 101, 501 und 502) entlang einer Schwenkachse gelenkig miteinander verbunden sind.

9. Einheit nach Anspruch 8, dadurch gekennzeichnet, daß die Schwenkachse sich nahe einer der Seiten der Teile (1 und 2, 30 und 31, 82 und 85, 90 und 91, 100-200 und 101, 501 und 502) befindet.

10. Einheit nach Anspruch 9, dadurch gekennzeichnet, daß die Teile (1 und 2, 30 und 31, 82 und 85, 90 und 91, 100-200 und 101, 501 und 502) Falze auf derjenigen ihrer Seiten aufweisen, die der Gelenkachse am nächsten liegt.

11. Einheit nach Anspruch 4, dadurch gekennzeichnet, daß die beweglichen Teile (1 und 2, 30 und 31, 501 und 502) stumpf zusammenwirken sollen, wobei die Abschnitte mit konvexer Bogenkrümmung und mit konkaver Bogenkrümmung im wesentlichen senkrecht zur Ebene der eigentlichen beweglichen Teile (1 und 2, 30 und 31, 501 und 502) fluchtend ausgerichtet sind.

12. Einheit nach Anspruch 4, dadurch gekennzeichnet, daß die beweglichen Teile (82 und 85, 90 und 91, 100-200 und 101) sich in der Schließstellung in Ebenen befinden müssen, die im wesentlich in der gegenseitigen Verlängerung liegen, so daß die Ränder sich selbst in der Verlängerung der beweglichen Teile (1 und 2, 30 und 31, 501 und 502) und die Abschnitte in Form einer konvexen bzw. konkaven Bogenkrümmung sich in der Verlängerung dieser Ränder befinden.

13. Einheit nach Anspruch 4, dadurch gekennzeichnet, daß die Falze (5 und 6) paarweise verschobene Stoßkanten aufweisen, die sich aufeinander legen sollen, wenn die beiden Teile (1 und 2) in der Schließstellung sind.

14. Einheit nach Anspruch 1, dadurch gekennzeichnet, daß eine elastische Dichtung (10) an einem der Falze (5) gegenüber dem entgegengesetzten Falz (6) befestigt ist.

15. Einheit nach Anspruch 4, dadurch gekennzeichnet, daß sie Mittel (300 bis 308) aufweist, die den Verschluß der beiden Teile (100-200 und 101) vor den Falzen (103-203, 104-204, 105-205 und 106-206) abdichten, wobei diese einen zwischen den beiden Teilen (100-200 und 101) liegenden Raum abgrenzen, wenn sie sich in der Schließstellung befinden, der mit einer Luftansaugvorrichtung (323) verbunden ist.

16. Einheit nach Anspruch 15, dadurch gekennzeichnet, daß mindestens eines der beiden Teile (100) Abstandsstücke (122) aufweist, die in der Schließstellung mit dem anderen Teil (200) zusammenwirken.

17. Einheit nach Anspruch 16, dadurch gekennzeichnet, daß die beiden Teile (100 und 200) Abstandsstücke (122 und 222) aufweisen, wobei die Abstandsstücke (122) des einen Teils (100) sich in der Schließstellung gegen diejenigen (222) des anderen Teils (200) legen.

18. Einheit nach Anspruch 1, dadurch gekennzeichnet, daß die beiden verschiedenen Teile zusammengefügt werden, um untrennbar gemacht zu werden und eine einzige Struktur (92) zu bilden, die aus zwei Schalen (75 und 76, 92a und 92b) besteht.

19. Einheit nach Anspruch 18, dadurch gekennzeichnet, daß die Schalen (75 und 76, 92a und 92b) einen Innenraum (77 - 92c) begrenzen.

20. Einheit nach Anspruch 19, dadurch gekennzeichnet, daß der Innenraum (77 - 92c) Abstandsstücke zwischen den Schalen (75 und 76, 92a und 92b) enthält.

21. Einheit nach Anspruch 19, dadurch gekennzeichnet, daß der Innenraum (77) ein Füllmaterial (78) enthält.

22. Einheit nach Anspruch 1, dadurch gekennzeichnet, daß sie eine allgemein abgerundete Form hat.

23. Einheit nach Anspruch 1, dadurch gekennzeichnet, daß das Teil (1-2, 501-502), das eine konvexe Außenfläche mit einer Wölbung mit sehr flacher Krümmung besitzt, einen polygonalen Umriß aufweist, wobei jede Spitze des Polygons selbst gekrümmt und konvex ist, der an zur konvexen Außenfläche im wesentlichen orthogonale Seitenflächen anschließt.

24. Einheit nach Anspruch 23, dadurch gekennzeichnet, daß jede Spitze des Polygons ein Teil einer Kugel ist.

25. Einheit nach Anspruch 1, dadurch gekennzeichnet, daß die beiden verschiedenen Teile (30 und 31, 75 und 76, 92a und 92b, 501 und 502) asymmetrisch sind.

26. Einheit nach Anspruch 1, dadurch gekennzeichnet, daß die Falze (5) eine variable Breite aufweisen.

27. Einheit nach Anspruch 26, dadurch gekennzeichnet, daß aufgrund des polygonalen Umrisses der Einheit die größte Breite (5d - 5e) der Falze (5) sich in der Nähe der Spitzen des Polygons und/oder in der zentralen Zone seiner Seiten befindet.

28. Einheit nach Anspruch 26, dadurch gekennzeichnet, daß die größte Breite (5d - 5e) der Falze (5) sich an der Spitze der konvexen bzw. konkaven Bögen befindet.

29. Einheit nach Anspruch 1, dadurch gekennzeichnet, daß mindestens eines der Teile (1) aus einem Material mit variabler Dicke hergestellt ist.

30. Einheit nach Anspruch 1, dadurch gekennzeichnet, daß mindestens eines der beiden Teile Verstärkungsrippen (1a - 1b, 1c - 1d, 1f) aufweist.

31. Einheit nach Anspruch 30, dadurch gekennzeichnet, daß die Verstärkungsrippen hohl sind.

32. Einheit nach Anspruch 31, dadurch gekennzeichnet, daß die Verstärkungsrippen (1f) ein Füllmaterial (1e) wie z.B. ein ggf. umhüllter synthetischer Schaum, ein wabenförmiges Gitter oder ähnliches aufweisen.

33. Einheit nach Anspruch 1, dadurch gekennzeichnet, daß sie aus einem Behälter wie z.B. einen Gepäckstück, einem Container oder ähnlichem (601) besteht und außen Gleitorgane wie z.B. Gleitstücke (602 und 603) aufweist, die vorteilhafterweise aus einem Stück mit der eigentlichen Einheit (601) hergestellt werden.
